# EUROPEAN PATENT APPLICATION

(11) **EP 0 691 177 A1**
(43) Date of publication of application: **10.01.1996**
(21) Application number: 95304581.2
(22) Date of filing: 29.06.1995
(51) Int. Cl.: B23P 19/00

(54) **Row feeder for distribution of nuts**

(30) Priority: 05.07.1994 JP 177449/94
(71) Applicant: YUGENKAISHA SHINJO SEISAKUSHO, Nishinariku, Osaka (JP)
(72) Inventor: Shinjo, Hiroshi, Nishinari-ku, Osaka (JP); Takeda, Arata, Kariya, Aichi (JP)
(74) Representative: Purvis, William Michael Cameron

(57) **Abstract**

A row feeder for distribution of nuts, the row feeder has a guide passage (14) for receiving a number of the nuts 'N' successively delivered in series, as well as distribution passages (15) extending from and perpendicular to the guide passage. Flexible feed hoses (13) have proximal ends respectively connected to the distribution passages, and pushers (20) reciprocate across the guide passage so as to transfer the nuts to the distribution passages. Drivers (21) such as pneumatic cylinders cause the pushers to reciprocate, and an air-jet mechanism (25 - 27) blows off the nuts which the pushers have transferred to distribution passages, each through one of the flexible feed hoses (13) to a distal destination, so that the row feeder successively receives the self-piercing or the like nuts and efficiently distribute them to the nut fixing apparatuses, the nut welders or the like.

## Description

The present invention relates to a row feeder for successive distribution of nuts, from a delivery source to a plurality of nut attaching or fixing apparatuses such as nut welders or self-piercing nut fixing apparatuses.

There are widely used a number of weldable nuts or the so-called self-piercing nuts, and they are affixed to metal plates such as those which are typically incorporated in automobile cars. The self-piercing nut has an end face serving as a punch against the metal plate, thereby causing the nut to punch an installation aperture in the metal plate and to simultaneously fix the nut in place on said plate. In order to automate the nut attaching operation, the nut supplying apparatuses widely employ the so-called vibrating feeder.

In a case wherein one automatic nut feeder successively supplies the nuts to one nut welder, the high capacity of the nut feeder is not fully utilized because the operation speed of the nut feeder is several times or several tens times as high as that of the nut welder.

The popular self-piercing nuts ( sometimes called 'nuts' below ) are applied to various metal plates, typically to those which construct a car body. It is a usual practice to attach in one shot many such nuts to one metal plate as a workpiece, which in many cases is subjected at the same time to the punching, blanking, trimming and/or partial drawing processes. Generally, several automatic nut fixing apparatuses are built in one pressing machine together with its main molds or parts. Any passage through which the nuts are fed to such self-piercing nut fixing apparatuses must not interfere with any punching dies or the like in the press. Thus, nut feeders are arranged in the vicinity of the press so as to deliver the nuts through flexible chute hoses to the nut fixing apparatuses. Due to the number of such apparatuses present in one press, many chute hoses must extend into the press and many nut feeders must be disposed near the press. Each nut feeder must have a transfer device to feed the nuts into the flexible chute. As a result, not only the routine tasks of changing, inspecting and/or repairing a press mold, but also the loading and unloading of the press with a workpiece are all rendered intricate. Further, the tasks of connecting to and disconnecting from the press many chute hoses are likewise complicated, while still other operations and the operator's movement around the press becomes difficult. In addition, an automatic mold exchanger in the recently available large-scale presses usually occupies a space too large to permit a sufficient space for the nut feeders.

The present inventors have already developed a row feeder for distributing the nuts to the self-piercing nut fixing apparatuses. This row feeder solves many of the problems inherent in the prior art. Also, nut welders may be supplied with nuts by the row feeder (The reader is referred to Japanese Patent Application No. Hei.4-213498 ).

The row feeder already developed, referred to above, comprises: a guide passage for receiving a number of nuts successively delivered in series; distribution passages extending from and perpendicular to the guide passage; individual feed hoses respectively connected to the distribution passages; pushers reciprocating across the guide passage so as to push the nuts thereon into the respective distribution passages; and drivers for causing the pushers to reciprocate. This feeder can efficiently distribute the nuts to a plurality of the self-piercing nut fixing apparatuses or to a plurality of the nut welders.

However, a problem sometimes occurs with such a row feeder. Those nuts having successively entered each of the feed hoses through the distribution passage will be packed in the hose to stay therein for a time before being transferred to the nut fixing apparatus. Each feed hose has a curved region located intermediate its opposite ends, so that the nuts propelled by the pusher encounter a resistance against their forward movement. Consequently, the pushers have to apply a stronger force. Large-scale pneumatic cylinders have to be included as drivers.' The row feeder is thus rendered larger and it is difficult or impossible for it to be accommodated in the restricted narrow space near the pressing machine. Further, the weight of many nuts packed in and throughout the hose will cause its middle portion to hang down due to gravitational force. Such hanging hoses will cause problems when changing, inspecting or repairing the press mold and loading or unloading it with workpieces.

The present invention aims to provide a row feeder improved in that its overall size can be reduced, and the flexible feed hoses are protected from hanging, so as to solve the problems noted above.

A row feeder according to the invention, for distribution of nuts, comprises: a guide passage for receiving a number of the nuts successively delivered in series; distribution passages extending from and perpendicular to the guide passage; a plurality of flexible feed hoses having proximal ends respectively connected to the distribution passages; pushers reciprocating across the guide passage so as to push the nuts thereon into the respective distribution passages; drivers for causing the pushers to reciprocate; and an air-jet means for blowing the nuts each through one of the flexible feed hoses to a distal end thereof, once the pusher transfers the nut from the guide passage to the distribution passage, wherein the distribution passages are disposed at regular intervals along the guide passage, each interval being the product of 'n' multiplied by the outer diameter of the nuts, with 'n' being an integer, so that all of the nuts on the guide passage are accurately aligned with respective entrances of the distribution passages.

Preferably, the pushers are operable individually for the respective distribution passages and any pusher can be kept inoperative voluntarily. A stopper may be disposed at a boundary between the guide passage and each distribution passage so that the nuts are inhibited from unintentionally entering the distribution passages.

The integer 'n' is preferably '2' in order to minimize the regular intervals and consequently the overall size of the row feeder.

In this row feeder, a number of nuts will successively be supplied in series to the guide passage and subsequently be driven by the pushers one by one into the distribution passages. Once the pusher transfers one nut to the distribution passage, the air-jet means will blow it through the flexible feed hose to the distal end thereof secured to the self-piercing nut fixing apparatus or nut welder. Thus, the nuts are not permitted to stay in the flexible feed hoses, but are 'jetted' one after another to the distal ends. On the other hand, the nuts are not allowed to enter inoperative distribution passageways whose entrances are blocked with the stoppers. Accordingly, selected pushers and selected parts of air-jet means will blow the nuts only through the currently operative distribution passageways and flexible feed hoses.

The invention will be better understood from the following non-limiting description of an example thereof given with reference to the accompanying drawings in which:-
Fig. 1 is a cross-section in a vertical plane of a row feeder according to an embodiment of the present invention and shown in its entirety;
Fig. 2 an enlarged plan view of the row feeder, with some portions thereof being shown in cross section;
Fig. 3 a cross section taken along the line 3 - 3 in Fig. 2;
Fig. 4 is a vertical cross section of some principal portions of the row feeder; and
Fig. 5 also is a cross-section of part of a row feeder according to another embodiment of the invention.

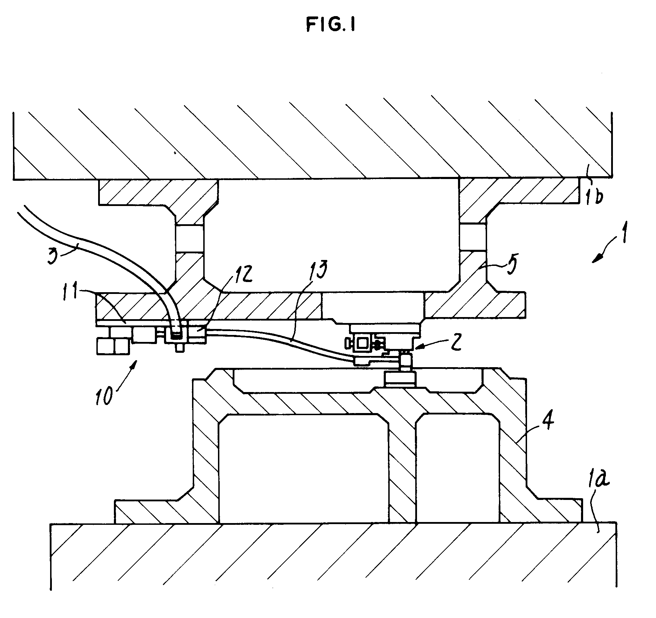

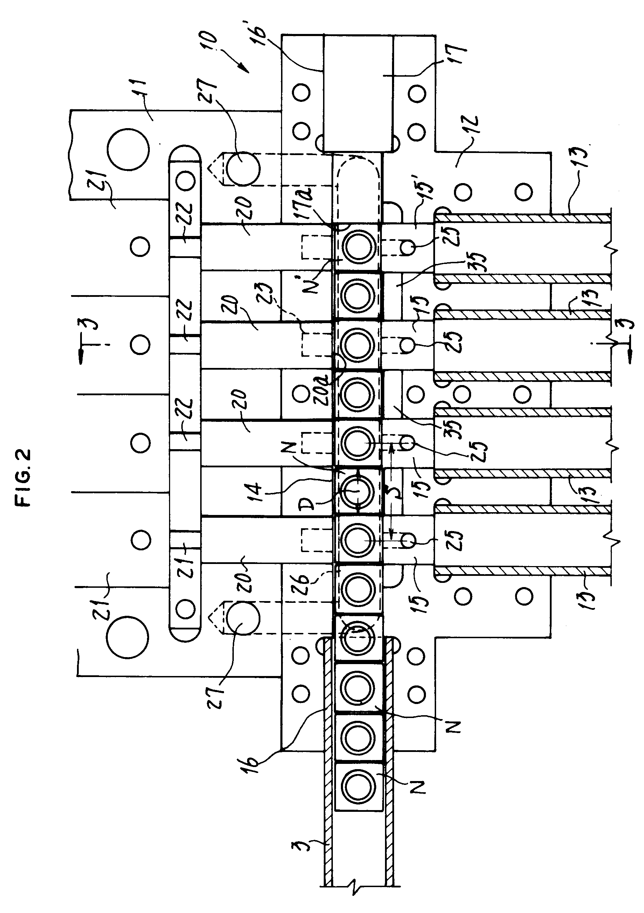

Fig. 1 illustrates a system which includes a row feeder provided herein for distribution of nuts, for example self-piercing nuts. This row feeder 10 is associated with a pressing machine 1 and a nut fixing apparatus 2. A nut supplier not shown but disposed in the vicinity of the pressing machine 1 will arrange the self-piercing nuts N (Fig.2, herein simply called 'nuts') to take their regulated position, before delivered in a successive manner to the row feeder 10 through a chute hose 3.

A lower mold 4 secured to a bolster la and an upper mold 5 detachably attached to a ram 1b are principal parts of the pressing machine. The nut fixing apparatus 2 has its parts secured to the upper and lower molds 4 and 5, together with some punches, dies and the like not shown. Usually, several,e.g.more than ten apparatuses 2 of this kind, are incorporated in each pressing machine 1. Since details of such a nut fixing apparatus are not relevant to the present invention, it will merely be outlined herein. Each self-piercing nut 'N' fed through a flexible feed hose 13 ( detailed below ) has an end face serving as a punch against a metal plate laid on a caulking die. The nut will thus form a hole in the metal plate so that the nut's end face is caulked and fixed to metal plate.

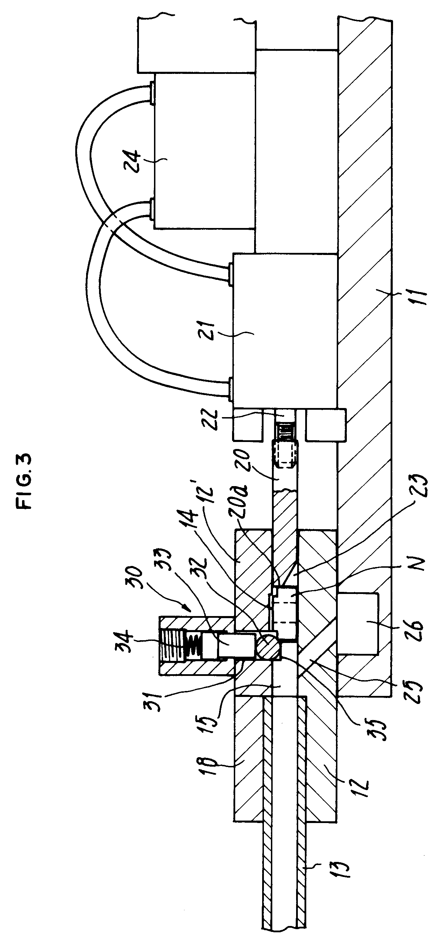

The row feeder 10 is connected by a base plate 11 to the upper mold 5 of the pressing machine 1. As shown in Figs. 2 and 3, the row feeder has a body 12 rigidly attached to the base plate 11. A guide passage 14 is formed in the body 12, such that a number of the nuts 'N' in series successively enter the guide passage. A plurality of distribution passages 15 ( e.g., four passages ) also formed in the body 12 protrude sideways from and perpendicular to the guide passage.

Junction holes 16 and 16' formed in the body are located outside and adjacent to opposite ends of the guide passage 14. The chute hose 3 is inserted in one of the junction holes 16 and secured therein with a clamp ( not shown ). A plug 17 fits in and closes the other junction hole 16'. An inner end 17a of this plug 17 in contact with the innermost distribution passage 15' serves as a fixed stopper. This stopper is intended to bear against the leading one N' of the successive nuts, which as mentioned above are supplied through the chute hose 3 to the guide passage. The leading nut N' abutting on the plug's inner end 17a will be at a position in alignment with the innermost passage 15'. The distribution passages 15 and 15' are arranged at regular intervals 'S' each being the product of an integer 'n' ( e.g., 2 in the embodiment ) multiplied by the outer diameter 'D' of nuts 'N'. Flexible feed hoses 13 communicating with distribution passages 15 have proximal ends fixed by clamps 18 ( shown in Fig. 3 ) to the body 12. Distal ends of the flexible feed hoses 13 are connected to the nut fixing apparatuses 2 referred to above.

Pushers 20 corresponding to the distribution passages 15 are operative relative to the body 12 of this row feeder. Pneumatic cylinders 21 mounted on the base plate 11 have piston rods 22 connected to the pushers 20 so that the latter can selectively be driven to reciprocate. In detail, any pusher 20 selected and driven to advance across the guide passage 14 will push the nut 'N' thereon into the corresponding distribution passage 15. This pusher subsequently retracted to its home position will have its end face 20a in flush with the inner wall surface of the guide passage. An air injecting groove 23 is formed in the bottom of each pusher 20. This groove extending to and opened in the end face 20a is one of the members included in the air-jet means for blowing the nuts, as detailed below. Pneumatic cylinders 21 for driving the respective pushers 20 will selectively be actuated by solenoid valves 24 mounted on the base plate 11.

An air injecting, preferably slanted, bore 25 penetrates the bottom of each distribution passage 15, so as to communicate with a common air duct 26 groove-shaped and formed in the base plate 11. The air duct 26 extending beneath and in parallel with the guide passage 14 has opposite ends communicating with air inlets 27 and 27. Compressed air is fed through the inlets 27 to the air duct 26, once any pusher 20 has moved forwards to displace the nut 'N' into the distribution passage 15. The compressed air thus supplied will urge the nut to move rapidly through the flexible feed hose 13 and quickly reach its destination, that is, the distal end of hose 13connected to the nut fixing apparatus 2. In response to arrival of the nut 'N' at the destination, supply of compressed air is ceased instantaneously.

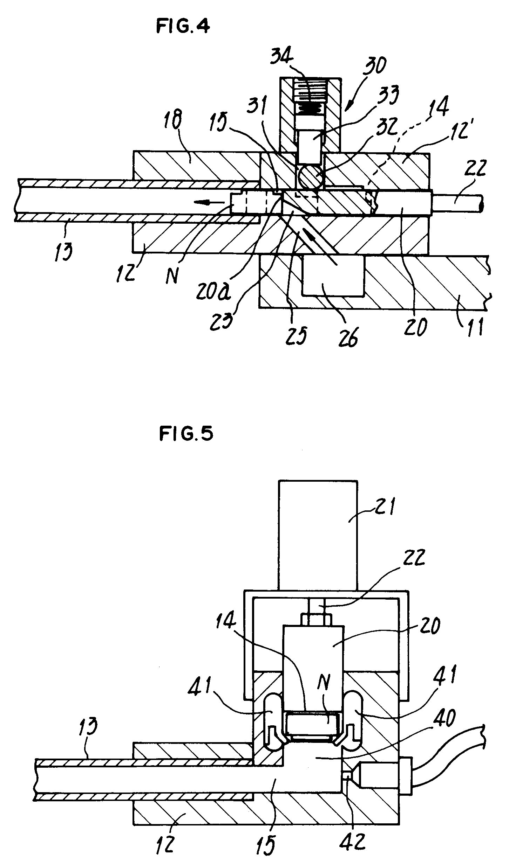

Stoppers 30 (Figs 3 and 4) are disposed at the boundaries each defined between the distribution passage 15 and the guide passage 14. As best seen in Fig. 3, each stopper 30 comprises a roller 32, a pin 33 and a compression spring 34 which urges the pin towards the roller. The roller 32 fitted in an aperture 31 formed in a cover 12' of the row feeder body 12 will have in its normal state a portion protruding into the boundary. Both ends of each roller 32 are supported in recesses 35 ( see Fig. 2 ) which are formed in the body portions located beside each distribution passage. The roller's portion jutting into the boundary region prevents the nuts 'N' from unintentionally being transferred into the distribution passages 15 from the guide passage 14. However, when the pusher 20 is driven to force the nut forwards away from the guide passage 14, the nut 'N' itself will cause the roller 32 to be retracted against the spring 34 so that the nut can transfer into the distribution passage 15.

In operation, the nuts 'N' in a row will continuously enter the guide passage 14 the row feeder 10 from its chute hose 3. When any pneumatic cylinder 21 is actuated, the nut will be thrust by the pusher 20 operatively connected to that cylinder. This nut 'N' will enter the distribution passage 15, and will force upwardly the roller 32 against the spring 34. In response to this movement of the nut, compressed air is supplied through the inlets 27 and 27 into the common air duct 26 so as to burst through all the air injecting bores 25 in harmony. A part of the compressed air will be guided into the distribution passage through the pusher's air injecting groove 23. The nut 'N' thus blown by the air moves rapidly through that flexible feed hose 13 which corresponds to the actuated and subsequently retracted pneumatic cylinder's piston rod. At the instant of the nut's arrival at the destination in the nut fixing apparatus 2, supply of compressed air to the inlets 27 and 27 is stopped. These actions are repeated to feed the nuts one after another quickly through the different distribution passages 15 arranged side by side.

Fig. shows another embodiment of the invention wherein the guide passage 14 is disposed above the distribution passages 15. The pushers 20 will thus reciprocate vertically this case, a pair of pawls 41 substitute for the stopper 30 employed in the first embodiment. Those pawls 41 will temporarily hold the nut 'N' in place, lest gravitational force should allow it to fall into an intermediate passage 40 located between the passages 14 and 15 shown in Fig. 5. An air-injecting bore 42 is formed in a rear wall of each distribution passage 15. This embodiment may be modified such that the guide passage 14 may be disposed below the distribution passages 15.

Although the row feeder has been described above in connection with nut fixing apparatuses 2, it may be used to distribute the nuts to a plurality of nut welders.

It will now be apparent that one row feeder provide herein can efficiently feed the self-piercing or the like nuts to a plurality of the nut fixing apparatuses, nut welders or the like. A small stroke is sufficient for each pusher to transfer the nuts from the guide passage to respective distribution passages, thus reducing the power and size of the pneumatic cylinders needed, and minimizing the overall size of the row feeder. The nuts are blown from the distribution passages to rush through the flexible feed hoses one by one at a high speed, so that the jamming of nuts in the hanging feed hoses is avoided. This makes operation and maintenance of the row feeder easier.

## Claims

1. A row feeder for distribution of nuts, the row feeder comprising:
a guide passage (14) for receiving a number of the nuts (N) successively delivered in series;
distribution passages (15) extending from and perpendicular to the guide passage (14);
a plurality of flexible feed hoses (13) having proximal ends respectively connected to the distribution passages (15);
pushers (20) reciprocating across the guide passage so as to push the nuts thereon into the respective distribution passages (15); and
drivers (21) for causing the pushers (20) to reciprocate;
characterised by an air-jet means (23, 25, 26) for blowing the nuts each through one of the flexible feed hoses (13) to a distal end thereof, once the pusher transfers the nut from the guide passage to the distribution passage,
and by the distribution passages being disposed at regular intervals each being the product of 'n' multiplied by the outer diameter of the nuts, with 'n' being an integer, so that all of the nuts in the guide passage (14) are accurately aligned with respective entrances of the distribution passages (15).

2. A row feeder as defined in claim 1, wherein the pushers are operable individually for the respective distribution passages and any pusher can be kept inoperative voluntarily.

3. A row feeder as defined in claim 1 or 2, further comprising a stopper (30) disposed at a boundary between the guide passage (14) and each distribution passage (15), the stopper being arranged to inhibit the nuts from unintentionally entering the distribution passages.

4. A row feeder as defined in claim 1, 2 or 3, wherein the integer 'n' is 2.

5. A row feeder as defined in claim 1 or 2, wherein the guide passage (14) is disposed above or below the distribution passages (15), with the pushers being constructed to reciprocate vertically to transfer the nuts from the guide passage to the distribution passages.

6. A row feeder as defined in claim 5 including a pair of pawls (41) for temporarily holding the nut in place in the guide passage (14).
